# EUROPÄISCHE PATENTSCHRIFT

(11) **EP 1 320 106 B1**
(45) Veröffentlichungstag und Bekanntmachung des Hinweises auf die Patenterteilung: **13.02.2013**
(21) Anmeldenummer: 02027449.4
(22) Anmeldetag: 10.12.2002
(51) Int. Cl.: G21C 7/16, G21C 7/20, G21C 9/027

(54) **Steuerstabantrieb für einen Kernreaktor und Verfahren zum Einfahren eines Steuerestabs in einen Reaktorkern eines Kernreaktors**
Control rod drive for nuclear reactor and method for inserting a control rod into a reactor core of a nuclear reactor
Entraînement de barre de contrôle pour reacteur nucléaire et méthode pour inserer une barre de contrôle dans le coeur d'un reacteur nucléaire

(30) Priorität: 13.12.2001 DE 10161219
(43) Veröffentlichungstag der Anmeldung: 18.06.2003
(73) Patentinhaber: AREVA NP GmbH, 91052 Erlangen (DE)
(72) Erfinder: Wintermann, Benedikt, 91054 Buckenhof (DE)
(74) Vertreter: Tergau & Walkenhorst

(56) Entgegenhaltungen:
- DE-A- 3 342 838
- DE-B- 1 230 140

## Beschreibung

Die Erfindung betrifft einen Steuerstabantrieb für einen Kernreaktor, insbesondere für einen Siedewasserreaktor, sowie ein Verfahren zum Einfahren eines Steuerstabs in einen Reaktorkern eines Kernreaktors, insbesondere zur Schnellabschaltung des Kernreaktors.

Bei einem Kernreaktor, insbesondere bei einem Leichtwasserreaktor, findet eine Regulierung der nuklearen Kettenreaktion vor allem durch die so genannten Steuerstäbe statt, die in einzelnen Brennelemente oder zwischen diese eingefahren werden und Neutronen absorbieren. Die Steuerstäbe werden sowohl zur Leistungsregulierung des Kernreaktors, beispielsweise beim Anfahren sowie während seines normalen Betriebs, als auch für eine Schnellabschaltung des Kernreaktors im Falle einer Störung verwendet.

Bei einem Siedewasserreaktor sind die Steuerstäbe üblicherweise von unten in den innerhalb eines Reaktordruckbehälters angeordneten Reaktorkern eingeführt. Außerhalb des Reaktordruckbehälters ist ein Steuerstabantrieb angeordnet, mit dessen Hilfe das Ein- bzw. Ausfahren der Steuerstäbe vorgenommen wird. Im Falle einer Schnellabschaltung werden die Steuerstäbe in kürzester Zeit hydraulisch in den Reaktorkern eingeschossen. Hierzu ist der Steuerstabantrieb an eine Druckleitung, die so genannte Scram-Leitung, angeschlossen.

Aus der DE 44 41 751 C1 ist ein Schnellabschaltsystem und ein Verfahren zur Schnellabschaltung eines Kernreaktors beschrieben, bei dem die einzelnen Steuerstäbe in unabhängig voneinander ansteuerbare Gruppen aufgeteilt sind.

Der prinzipielle Aufbau eines Steuerstabantriebs, der beispielsweise auch aus der DE 1 230 140 A hervorgeht, wird im Folgenden anhand der Fig. 4 erläutert. Diese zeigt den Steuerstabantrieb 2 in einer teilweise geschnittenen Darstellung und in seiner am Reaktordruckbehälter 4 montierten Position. Vom Reaktordruckbehälter 4 ist lediglich ein Ausschnitt zu erkennen.

Der Steuerstabantrieb 2 ist mit einem Antriebsgehäuse 8 an einem in den Innenraum 7 des Reaktordruckbehälters 4 hineinreichenden Stutzen 6 befestigt. Am Antriebsgehäuse 8 ist endseitig außerhalb des Reaktordruckbehälters eine Antriebseinheit 9 vorgesehen, die einen ein Motor 10 umfasst, der über ein Getriebe 12 eine Antriebswelle 14 mit einem Spindelantrieb 16 antreibt. Der Spindelantrieb 16 ist gebildet aus einer auf der Antriebswelle 14 ausgebildeten Spindel 18, die durch eine Mutter 20 geführt ist. Die Mutter 20 ist innerhalb eines Führungsrohrs 22 geführt und trägt einen Hohlkolben 24, der mit seinem nach Art eines Flansches 25 ausgebildeten unteren Ende lose auf der Mutter 20 aufsitzt. Sowohl die Mutter 20 als auch der Hohlkolben 24 sind über Führungsrollen 26 im konzentrisch zum Antriebsgehäuse 8 angeordneten Führungsrohr 22 geführt. Der Hohlkolben 24 weist an seinem oberen, verschlossenen Ende 27 eine Kupplung 28 auf, an die der zu.verfahrende Steuerstab 29 befestigt ist, der nur ansatzweise und stark vereinfacht angedeutet ist. Die Kupplung 28 reicht also in das Innere des Reaktordruckbehälters hinein. Im oberen Bereich des Antriebsgehäuses 8, und zwar im Bereich des Stutzen 6, ist eine so genannte Drosselbuchse 30 angeordnet, die den Hohlkolben 24 unter Ausbildung eines Toleranzspielraums umgibt.

Im normalen Betrieb erfolgt das Ein- bzw. Ausfahren des Steuerstabs mit Hilfe des Spindelantriebs 16. Bei einer Schnellabschaltung wird über einen Druckleitungsanschluss 32 ein unter sehr hohem Druck von beispielsweise 150 bar stehendes Druckfluid eingeströmt, welches den Hohlkolben 24 unabhängig von der Stellung der Mutter 20 nach oben schießen lässt. Da zwischen der Drosselbuchse 30 und dem Hohlkolben 24 lediglich der einen Strömungsweg bildende Toleranzspielraum (Leckagespalt) vorhanden ist, baut sich der vom Druckfluid bereitgestellte Druck vollständig auf und führt zu einer Beschleunigung des Hohlkolbens 24. Erreicht dieser mit seinem Flansch 25 die als Gegenanschlag wirkende Drosselbuchse 30, so erfolgt eine nahezu abrupte Abbremsung des Hohlkolbens 24. Die hierbei auftretenden Kräfte werden zwar von einer geeigneten Lagerung und insbesondere von einem geeignet dimensionierten Federelement 34 aufgenommen, jedoch ist die mechanische Belastung sehr hoch. Zudem besteht das Problem, dass beim Öffnen der an den Druckleitungsanschluss 32 angeschlossenen Druckleitung ein Druckstoß auftritt, der zu einer Übergeschwindigkeit und zu einer erhöhten Belastung führen kann.

Der Erfindung liegt die Aufgabe zugrunde, ein verbessertes und schonendes Einfahren eines Steuerstabs im Falle einer Schnellabschaltung zu ermöglichen.

Die Aufgabe wird gemäß der Erfindung gelöst durch einen Steuerstabantrieb mit den Merkmalen des Patentanspruchs 1. Bei diesem Steuerstabantrieb ist vorgesehen, dass der freie Strömungsquerschnitt des über die Drosselbuchse hinweg führenden Strörnungswegs sich in Abhängigkeit der aktuellen Stellung des Steuerstabtragelements verändert. Der Strömungsweg ist dabei insbesondere gebildet durch den Spalt zwischen der Drosselbuchse und einem insbesondere als Hohlkolben ausgebildeten Steuerstabtragelement. Um diese variierenden Strömungsverhältnisse durch eine einfache Konstruktion zu erreichen, ist vorgesehen, dass das Steuerstabtragelement einen sich verändernden Außendurchmesser aufweist. D.h. beim Durchfahren des Steuerstabtragelements durch die Drosselbuchse ändert sich automatisch der Spalt zwischen diesen beiden Elementen aufgrund des sich verändernden Außendurchmessers. Zweckdienlicherweise weist dabei das Steuerstabtragelement in einem unteren, der Antriebseinheit zugewandten Bereich, einen reduzierten Außendurchmesser auf, um das gewünschte Abbremsverhalten des Hohlkolbens bei Erreichen der eingefahrenen Endstellung zu erzielen.

Die Erfindung geht hierbei von der Überlegung aus, durch eine geeignete Beeinflussung des Druckabfalls über der Drosselbuchse den auf den Hohlkolben (Steuerstabtragelement) einwirkenden Druck zu variieren und dahingehend einzustellen, dass sich die Geschwindigkeit des Hohlkolbens beim Einschießen verändert.

Hiermit kann also über die Einfahrlänge des Hohlkolbens ein geeignetes Geschwindigkeitsprofil ausgebildet werden, das kritische Belastungsspitzen vermeidet. Dies bedeutet, dass insbesondere vor Erreichen der eingefahrenen Endstellung des Hohlkolbens die Geschwindigkeit möglichst reduziert wird, um die Aufprallkräfte beim Anschlagen des Hohlkolbens gegen die Drosselbuchse gering zu halten. Es wird also durch geeignete Wahl der Strömungsverhältnisse zwischen der Drosselbuchse und dem Hohlkolben in Abhängigkeit der Stellung des Hohlkolbens ein Einfahren ermöglicht, das im Vergleich zu einem herkömmlichen Steuerstabantrieb deutlich geringere mechanische Belastungen mit sich bringt. Aufgrund der geringeren Belastungen können die zusätzlichen Bremseinrichtungen, wie beispielsweise das Federelement, einfacher und insbesondere kürzer ausgeführt werden. Insgesamt lässt sich dadurch die Baulänge des gesamten Steuerstabantriebs verkürzen.

In einer zweckdienlichen Weiterbildung nimmt der freie Strömungsquerschnitt von der Grundstellung im ausgefahrenen Zustand zu der eingefahrenen Endstellung zu. Unter Grundstellung wird hierbei diejenige Stellung verstanden, in der der Steuerstab vollständig aus dem Reaktorkern ausgefahren ist. Durch diese Maßnahme wird erreicht, dass der auf den Hohlkolben einwirkende Druck und damit die Geschwindigkeit des Hohlkolbens reduziert wird, wenn sich dieser der eingefahrenen Endstellung nähert. Der Strömungswiderstand für das Druckfluid zwischen der Drosselbuchse und dem Hohlkolben ist also reduziert, so dass das Druckfluid unter geringerem Widerstand in das Innere des Reaktordruckbehälters gelangen kann.

Im Hinblick auf eine geeignete Strömungsführung verjüngt sich das Steuerstabtragelement vorzugsweise in einem Verjüngungsbereich stetig auf den reduzierten Außendurchmesser, so dass sich der Strömungswiderstand stetig ändert. Insbesondere weist das Steuerstabtragelement dabei einen im Querschnitt gesehenen konisch verlaufenden Bereich auf.

Im Hinblick auf ein geeignetes Abbremsverhalten bei gleichzeitiger Beibehaltung eines ausreichend schnellen Einschießens des jeweiligen Steuerstabs weist das Steuerstabtragelement lediglich über eine bestimmte Länge den reduzierten Durchmesser gleichbleibend auf.

Für die sich verändernden Strömungswiderstände in Abhängigkeit der Stellung des Steuerstabtragelements ist alternativ oder in Kombination zu der Reduzierung des Außendurchmessers des Steuerstabtragelements in dem als Hohlkörper ausgeführten Steuerstabtragelement vorzugsweise eine Bypassöffnung vorgesehen. Dem Druckfluid steht daher auch über die Bypassöffnung ein über die Drosselbuchse hinweg führender Strömungsweg offen, der jedoch nur dann wirksam ist, wenn beim Einfahren die Bypassöffnung im Bereich der Drosselbuchse ist, und insbesondere dann, wenn die Bypassöffnung die Drosselbuchse durchlaufen hat, sich also im Inneren des Reaktordruckbehälters befindet. Die Änderung des Strömungswiderstands bestimmt sich dabei im Wesentlichen nach der Größe der Bypassöffnung. Es können auch mehrere Bypassöffnungen an unterschiedlichen Längenpositionen des Hohlkörpers vorgesehen sein.

Bei der Kombination des reduzierten Außendurchmessers mit der Bypassöffnung ist diese vorzugsweise im Bereich vor oder im Bereich der Verjüngung des Steuerstabtragelements auf den reduzierten Außendurchmesser angeordnet. Damit wird in vorteilhafter Weise eine Veränderung der Strömungsverhältnisse bereits erzielt, bevor der reduzierte Außendurchmesser wirksam wird. Durch die beiden unabhängigen Maßnahmen der Bypassöffnung und des reduzierten Außendurchmessers lässt sich in einfacher Weise ein gewünschtes Geschwindigkeitsprofil einstellen.

Zweckdienlicherweise weist das Steuerstabtragelement im Bereich mit dem reduzierten Außendurchmesser einen Außensteg auf, der sich innerhalb der Drosselbuchse befindet, wenn das Steuerstabtragelement in der eingefahrenen Endstellung positioniert ist. Diese Maßnahme bewirkt eine Erhöhung der Strömungsgeschwindigkeit, wenn der Hohlkolben die eingefahrene Position erreicht hat. Damit wird das Eindringen von Schmutzpartikeln vermieden. Zweckdienlicherweise ist der Außensteg als umlaufender Ringsteg ausgebildet, dessen Außendurchmesser in etwa dem Innendurchmesser der Drosselbuchse entspricht. Der Ringsteg dichtet daher den zwischen dem reduzierten Außendurchmesser und der Drosselbuchse bestehenden Spalt bis auf einen Toleranzspielraum weitgehend ab.

Für eine sichere Führung des Steuerstabtragelements in einem hierfür vorgesehenen Führungsrohr sind im Bereich des reduzierten Außendurchmessers vorzugsweise Längsstege angeordnet. Diese unterbrechen quasi den reduzierten Außendurchmesser und erstrecken sich in radialer Richtung bis zum normalen Außendurchmesser, also dem ursprünglichen Außendurchmesser, der noch nicht reduziert ist. Die Längsstege sind dabei derart angeordnet, dass sie beim Einfahren des Steuerstabtragelements von im Inneren des Führungsrohrs angeordneten Führungselementen, insbesondere Führungsrollen, geführt werden.

Die Aufgabe wird erfindungsgemäß weiterhin gelöst durch ein Verfahren zum Einfahren eines Steuerstabs in einen Reaktorkern eines Kernreaktors mit den Merkmalen des Patentanspruchs 12. Danach ist vorgesehen, dass sich beim Einfahren der sich über der Drosselbuchse ausbildende Strömungswiderstand für das Druckfluid infolge des variierenden Außendurchmessers des Steuerstabtragelements verändert.

Die im Hinblick auf den Steuerstabantrieb angeführten Vorteile und bevorzugten Ausführungsformen sind sinngemäß auch auf das Verfahren zu überragen.

Ein Ausführungsbeispiel der Erfindung wird im Folgenden anhand der Zeichnung näher erläutert. Es zeigen:
- Fig. 1: ein ausschnittsweise und stark vereinfachte Darstellung eines Steuerstabantriebs im Bereich der Drosselbuchse, bei dem sich ein Steuerstabtragelement in einer Zwischenstellung zwischen einer unteren ausgefahrenen Grundstellung und einer oberen eingefahrenen Endstellung befindet,
- Fig. 2: den ausschnittsweise dargestellten Steuerstabantrieb der Fig. 1 in der eingefahrenen oberen Endstellung und
- Fig. 3: eine Querschnittsansicht des Steuerstabtragelements im Bereich des reduzierten Außendurchmessers mit Längsstegen,
- Fig. 4: eine Darstellung eines Steuerstabantriebs in herkömmlicher Bauart.

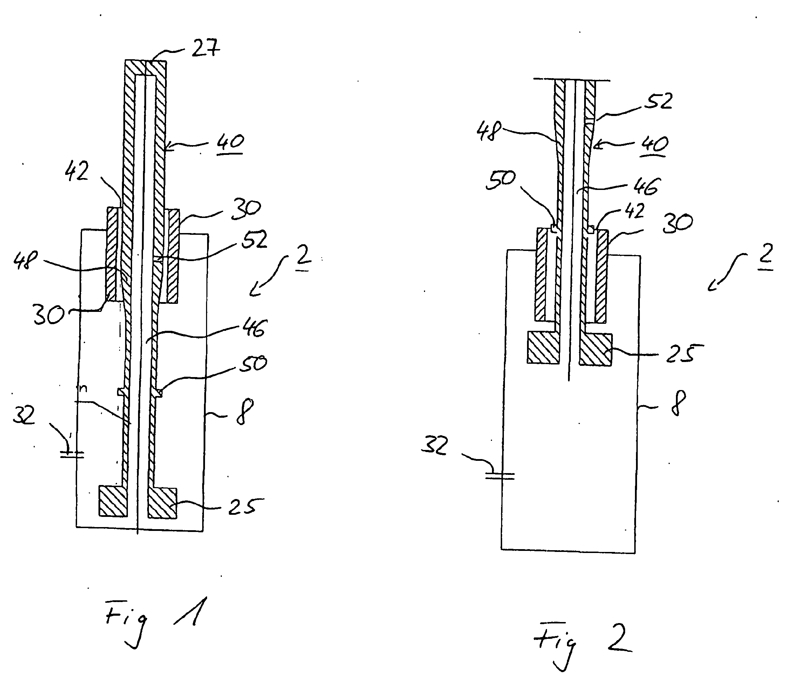

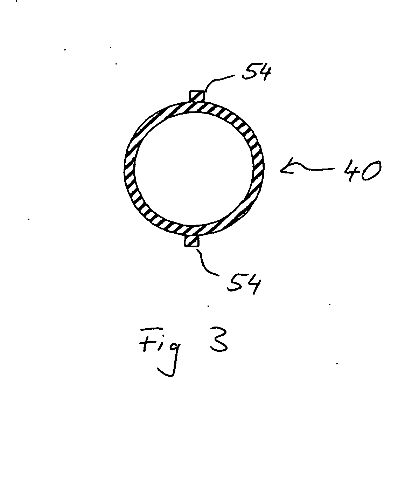

In den Figuren sind gleichwirkende Teile mit den gleichen Bezugszeichen versehen, insbesondere sind in den Fig. 1 und 2 für gleichwirkende Teile die gleichen Bezugszeichen verwendet, wie sie bereits für die Darstellung des herkömmlichen Steuerstabantriebs nach Fig. 3 verwendet wurden.

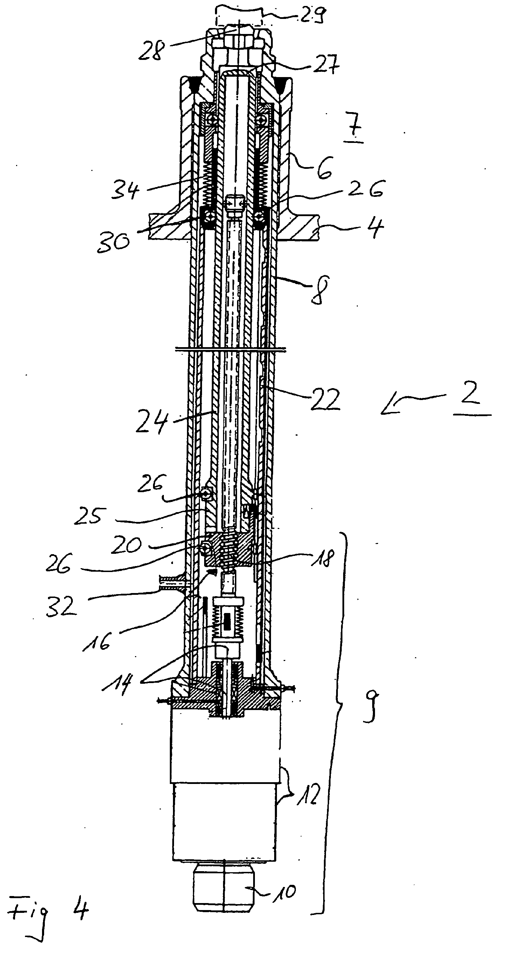

Nach den Fig. 1 und 2 ist ein als Hohlkolben ausgeführtes Steuerstabtragelement 40 durch die Drosselbuchse 30 geführt. Die Drosselbuchse 30 sowie das Steuerstabtragelement 40 sind innerhalb des hier nur stark vereinfacht dargestellten Antriebsgehäuses 8 angeordnet. Die Drosselbuchse 30 ist lediglich im Bereich des Stutzens 6 (Fig. 4) angeordnet, erstreckt sich also nur über eine vergleichsweise kurze Länge des Steuerstabtragelements 40. Seitlich in das Antriebsgehäuse 8 mündet der Druckleitungsanschluss 32.

Nach Fig. 1 befindet sich das Steuerstabtragelement 40 in einer Zwischenstellung zwischen einer unteren Grundstellung und der in Fig. 2 dargestellten oberen eingefahrenen Endstellung. In der Grundstellung schließt das obere geschlossene Ende 27 des Steuerstabtragelements 40 annähernd mit dem oberen Ende der Drosselbuchse 30 ab.

Das Steuerstabtragelement 40 erstreckt sich vom Flansch 25 an seinem unteren, offenen Bereich zu seinem oberen, geschlossenen Ende 27. Während der von dem Steuerstabtragelement 40 eingeschlossene Hohlraum 46 einen gleich bleibenden Innendurchmesser aufweist, verändert sich der Außendurchmesser des Steuerstabtragelements 40 über seine Länge. Dadurch verändert sich die Spaltbreite des zwischen der Drosselbuchse 30 und dem Steuerstabtragelement 40 befindlichen Spalts, sobald sich die Relativposition zwischen der Drosselbuchse 30 und dem Steuerstabtragelement 40 verändert. Es ist also vom Inneren des Antriebsgehäuses 8 in den Innenraum 7 des Reaktordruckbehälters 7 ein Strömungsweg 42 gebildet, dessen freier Strömungsquerschnitt in Abhängigkeit der Stellung des Steuerstabtragelements variiert. Dabei weist das Steuerstabtragelement 40 im Bereich seines oberen Endes 27 den maximalen Außendurchmesser auf, der über einen Teil seiner Gesamtlänge beibehalten wird. Anschließend verjüngt sich das Steuerstabtragelement 40 in einem Verjüngungsbereich 48 stetig auf einen reduzierten Außendurchmesser, den das Steuerstabtragelement 40 bis zum Flansch 25 beibehält. Die Reduzierung des Außendurchmessers wird durch eine Schwächung der Wand des Steuerstabtragelements 40 erzielt.

Weiterhin weist im Ausführungsbeispiel das Steuerstabtragelement 40 eine Bypassöffnung 52 auf, die im Bereich oberhalb des Verjüngungsbereiches 48 angeordnet ist und sich insbesondere an diesen anschließt. Dadurch ist - bei geeigneter Stellung des Steuerstabtragelements 40 - ein weiterer Strömungsweg für das Druckfluid über den Innenraum 46 durch die Wand des Steuerstabtragelements 40 in den Innenraum 7 des Reaktordruckbehälters 4 gebildet. Die Anordnung der Bypassöffnung ist nicht zwingend erforderlich.

Etwa mittig zwischen dem Verjüngungsbereich 48 und dem Flansch 25 ist ein umlaufender Ringsteg 50 angeordnet, dessen Außendurchmesser im Ausführungsbeispiel in etwa dem maximalen Außendurchmesser im oberen Bereich des Steuerstabtragelements 40 entspricht. Wie der Fig. 2 zu entnehmen ist, ist der Ringsteg 50 derart angeordnet, dass er sich am oberen Ende der Drosselbuchse 30 befindet, wenn das Steuerstabtragelement 40 in der oberen eingefahrenen Endstellung positioniert ist. Der Flansch 25 wirk dabei als Gegenanschlag, mit dem das Steuerstabtragelement 40 beim Einfahren an der Drosselbuchse 30 anschlägt.

Aufgrund dieser speziellen Ausgestaltung des Steuerstabtragelements 40 mit seinen variierenden Außendurchmessern und mit der Bypassöffnung 52 verändert sich der Strömungswiderstand für das Druckfluid, das über die Drosselbuchse 30 hinweg in den Innenraum 7 des Reaktordruckbehälters 4 strömen kann, in Abhängigkeit der Stellung, die das Steuerstabtragelement 40 jeweils aktuell einnimmt.

Bei einer Schnellabschaltung wird über den Druckleitungsanschluss 32 ein Druckfluid eingeströmt, welches über den Strömungsweg 42 aufgrund dessen großen Strömungswiderstands nur teilweise entweichen kann. Das Steuerstabtragelement 40 erfährt daher aufgrund des hohen Druckaufbaus eine starke Beschleunigung und wird mit hoher Geschwindigkeit nach oben verfahren. Erreicht das Steuerstabtragelement 40 die in Fig. 1 dargestellte mittlere Position, so verringert sich allmählich der Strömungswiderstand, d.h. der auf das Steuerstabtragelement 40 einwirkende Druck wird reduziert, so dass das Steuerstabtragelement 40 insgesamt etwas abgebremst wird. Die Reduzierung des Strömungswiderstands erfolgt zunächst über die Bypassöffnung 52, die ein Überströmen des Druckfluids aus dem Hohlraum 46 in den Strömungsweg 42 und von dort in den Innenraum des Reaktordruckbehälters 4 ermöglicht. Wenn das Steuerstabtragelement 40 noch weiter nach oben verfahren wird ermöglicht die Bypassöffnung 52 ein unmittelbares Überströmen des Druckfluids aus dem Hohlraum 46 in den Innenraum 7.

Der Strömungswiderstand wird anschließend zusätzlich durch die Reduzierung des Außendurchmessers im Verlauf des Verjüngungsbereichs 48 erzielt. Aufgrund der stetigen und kontinuierlichen Verjüngung erfolgt ebenso eine stetige und gleichmäßige Verringerung der Geschwindigkeit des Steuerstabtragelements 40. Die stetige Änderung des Außendurchmessers und damit die stetige Änderung des Strömungswiderstands ist für ein möglichst gleichmäßiges und ruckfreies und damit materialschonendes Einfahren von Vorteil. Hat der Verjüngungsbereich 48 die Drosselbuchse 30 passiert, wird das Steuerstabtragelement 40 mit im Wesentlichen konstanter geringer Geschwindigkeit über das letzte Wegstück bis in die obere eingefahrene Endstellung (Fig. 2) gebracht.

Sobald der Ringsteg 50 in den Strömungsweg 42 eintritt, erhöht sich dessen Strömungswiderstand wieder und damit die Ausströmungsgeschwindigkeit, wodurch eine schmutzabweisende Strömung erreicht wird. Der Strömungsweg über die Bypassöffnung 52 ist weiterhin offen.

Um eine sichere Führung des Steuerstabtragelements 40 beim Einfahren zu gewährleisten, sind im Bereich des reduzierten Außendurchmessers Längsstege 54 angeordnet, wie dies aus Fig. 3 zu entnehmen ist. Im Ausführungsbeispiel sind zwei gegenüberliegende Längsstege 54 vorgesehen, die einen Außendurchmesser definieren, der insbesondere dem normalen Außendurchmesser des Steuerstabtragelements 40 vor dem Verjüngungsbereich 48 entspricht. Mit diesen Längsstegen 54 wird das Steuerstabtragelement 40 innerhalb des in Fig. 4 dargestellten Führungsrohrs 22 an den im Bereich der Drosselbuchse 30 vorgesehenen Führungsrollen 26 sicher geführt. Die Längsstege 54 können im Bedarfsfall auch als Schienen ausgebildet sein.

Mit der erfindungsgemäßen Vorrichtung ist mit einfachen Maßnahmen eine Einstellung der Einfahrgeschwindigkeit des Steuerstabelements 40 in Abhängigkeit seiner jeweiligen Position erreicht. Dadurch lässt sich insbesondere ein geeignetes Abbremsen des Steuerstabtragelements 40 vor Erreichen der eingefahrenen Endstellung erhalten. Weiterhin besteht dadurch die Möglichkeit, eine systembedingte Übergeschwindigkeit durch beim Einströmvorgang des Druckfluids hervorgerufene Druckspitzen zu reduzieren. Aufgrund dieser Maßnahmen werden die Bauteile des Steuerstabantriebs, insbesondere die für die Abbremsung vorgesehenen Bauteile, wie beispielsweise das Federelement 34 (Fig. 4), deutlich weniger belastet als bei der herkömmlichen Ausbildung. Dies ermöglicht insgesamt eine einfachere Auslegung der für den Bremsvorgang notwendigen Bauteile und geht im Vergleich mit der herkömmlichen Ausbildung einher mit einer Verkürzung der Baulänge dieser Bauteile, da beispielsweise die von dem Federelement 34 aufzunehmenden Kräfte geringer sind und dadurch das Federelement 34 verkürzt werden kann.

Das in den Fig. 1 und 2 dargestellte Prinzip wird vorzugsweise in einen Steuerstabantrieb 2 für einen Siedewasserreaktor eingesetzt, wie er beispielsweise in Fig. 4 dargestellt ist. Der in Fig. 4 dargestellte Steuerstabantrieb 2 wird also dahingehend modifiziert, dass das in den Fig. 1 bis 3 schematisch dargestellte Steuerstabtragelement 40 anstelle des in Fig. 4 dargestellten Hohlkolbens 24 mit dem gleich bleibenden Außendurchmesser verwendet wird.

### Bezugszeichenliste

- 2: Steuerstabantrieb
- 4.: Reaktordruckbehälter
- 6: Stutzen
- 7: Innenraum
- 8: Antriebsgehäuse
- 9: Antriebseinheit
- 10: Motor
- 12: Getriebe
- 14: Antriebswelle
- 16: Spindelantrieb
- 18: Spindel
- 20: Mutter
- 22: Führungsrohr
- 24: Hohlkolben
- 25: Flansch
- 26: Führungsrolle
- 27: oberes Ende
- 28: Kupplung
- 29: Steuerstab
- 30: Drosselbuchse
- 32: Druckleitungsanschluss
- 34: Federelement
- 40: Steuerstabtragelement
- 42: Strömungsweg
- 46: Hohlraum
- 48: Verjüngungsbereich
- 50: Ringsteg
- 52: Bypassöffnung
- 54: Längsstege

## Patentansprüche

1. Steuerstabantrieb (2) für einen Kernreaktor, insbesondere für einen Siedewasserreaktor, mit einem Antriebsgehäuse (8), in dem ein Steuerstabtragelement (40) zwischen einer Grundstellung und einer eingefahrenen Endstellung verfahrbar ist, das mit einem Teilabschnitt in einer Drosselbuchse (30) geführt ist und dessen unteres Ende (25) mit einer Antriebseinheit (9) zusammenwirkt, **dadurch gekennzeichnet, dass** ein über die Drosselbuchse (30) hinweg führender Strömungsweg (42) für ein Druckfluid mit einem in Abhängigkeit der aktuellen Stellung des Steuerstabtragelements (40) variierenden freien Strömungsquerschnitt vorgesehen ist, indem das Steuerstabtragelement (40) einen sich verändernden Außendurchmesser aufweist.

2. Steuerstabantrieb (2) nach Anspruch 1,
**dadurch gekennzeichnet,**
**dass** der freie Strömungsquerschnitt von der Grundstellung zu der eingefahrenen Endstellung zunimmt.

3. Steuerstabantrieb (2) nach Anspruch 1 oder 2,
**dadurch gekennzeichnet,**
**dass** das Steuerstabtragelement (40) in einem unteren, der Antriebseinheit (9) zugewandten Bereich, einen reduzierten Außendurchmesser aufweist.

4. Steuerstabantrieb (2) nach Anspruch 3,
**dadurch gekennzeichnet,**
**dass** sich das Steuerstabtragelement (40) in einem Verjüngungsbereich (48) stetig auf den reduzierten Außendurchmesser verjüngt.

5. Steuerstabantrieb (2) nach Anspruch 3 oder 4,
**dadurch gekennzeichnet,**
**dass** das Steuerstabtragelement (40) nur über einen Teil seiner Länge den reduzierten Durchmesser gleichbleibend aufweist.

6. Steuerstabantrieb (2) nach einem der vorhergehenden Ansprüche,
**dadurch gekennzeichnet,**
**dass** das Steuerstabtragelement (40) als Hohlkolben ausgeführt ist, der in seiner Wand zumindest eine Bypassöffnung (52) aufweist.

7. Steuerstabantrieb (2) nach Anspruch 6 und Anspruch 3,
**dadurch gekennzeichnet,**
**dass** die Bypassöffnung (52) im Bereich vor oder im Bereich der Verjüngung (48) des Steuerstabtragelements (40) auf den reduzierten Außendurchmesser angeordnet ist.

8. Steuerstabantrieb (2) nach einem der Ansprüche 3 bis 5 oder 7,
**dadurch gekennzeichnet,**
**dass** das Steuerstabtragelement (40) im Bereich mit dem reduzierten Außendurchmesser einen Außensteg (50) aufweist, der sich innerhalb der Drosselbuchse (30) befindet, wenn das Steuerstabtragelement (40) in der eingefahrenen Endstellung positioniert ist.

9. Steuerstabantrieb (2) nach Anspruch 8,
**dadurch gekennzeichnet,**
**dass** der Außensteg als umlaufender Ringsteg (50) ausgebildet ist, dessen Außendurchmesser in etwa dem Innendurchmesser der Drosselbuchse (30) entspricht.

10. Steuerstabantrieb nach einem der Ansprüche 3 bis 9,
**dadurch gekennzeichnet,**
**dass** im Bereich des reduzierten Außendurchmessers Längsstege (54) angeordnet sind.

11. Verfahren zum Einfahren eines Steuerstabs (29) in einen Reaktorkern eines Kernreaktors, insbesondere zur Schnellabschaltung des Kernreaktors, bei dem ein Steuerstabtragelement (40), das den Steuerstab (29) trägt und in einem Teilbereich in einer Drosselbuchse (30) geführt ist, hydraulisch über ein Druckfluid verfahren wird,
**dadurch gekennzeichnet,**
**dass** sich beim Verfahren des Steuerstabtragelements (40) ein über der Drosselbuchse (30) ausbildender Strömungswiderstand für das Druckfluid infolge eines variierenden freien Strömungsquerschnitts durch einen varrierenden Außendurchmesser des Steuerstabtragelements (40) verändert.

## Claims

1. A control-rod drive (2) for a nuclear reactor, in particular for a boiling-water reactor, having a drive housing (8) in which a control-rod supporting member (40) can be moved between a basic position and a retracted end position, a partial section of said control-rod supporting member (40) being guided in a throttle bushing (30) and its lower end (25) cooperating with a drive unit (9),
**characterized in that**
a flow path (42) passing beyond the throttle bushing (30) is provided for a pressure fluid, with a free flow cross-section varying as a function of the current position of the control-rod supporting member (40) due to the fact that the control-rod supporting member (40) has a changing outer diameter.

2. The control-rod drive (2) of claim 1,
**characterized in that**
the free flow cross-section increases from the basic position towards the retracted end position.

3. The control-rod drive (2) of claim 1 or 2,
**characterized in that**
the control-rod supporting member (40) has a reduced outer diameter in a lower area facing towards the drive unit (9).

4. The control-rod drive (2) of claim 3,
**characterized in that**
the control-rod supporting member (40) continuously tapers, in a tapered zone (48), down to the reduced outer diameter.

5. The control-rod drive (2) of claim 3 or 4,
**characterized in that**
the control-rod supporting member (40) exhibits the reduced diameter constantly over part of its length only.

6. The control-rod drive (2) of any of the preceding claims,
**characterized in that**
the control-rod supporting member (40) is designed as a hollow piston, which includes at least one by-pass opening (52) in its wall.

7. The control-rod drive (2) of claim 6 and claim 3,
**characterized in that**
the by-pass opening (52) is arranged in front of or in the area of the tapering (48) of the control-rod supporting member (40) down to the reduced outer diameter.

8. The control-rod drive (2) of any of claims 3 to 5 or 7,
**characterized in that**
the control-rod supporting member (40) exhibits in the area of the reduced outer diameter an outer rib (50), which is situated inside the throttle bushing (30) when the control-rod supporting member (40) is positioned in the retracted end position.

9. The control-rod drive (2) of claim 8,
**characterized in that**
the outer rib is designed as a peripheral annular rib (50), whose outer diameter corresponds approximately to the inner diameter of the throttle bushing (30).

10. The control-rod drive (2) of any of claims 3 to 9,
**characterized in that**
longitudinal ribs (54) are arranged in the area of the reduced outer diameter.

11. A method for retracting a control rod (29) into a reactor core of a nuclear reactor, in particular for emergency shut-down of the nuclear reactor, wherein a control-rod supporting member (40) carrying the control rod (29) and being guided in a partial section of a throttle bushing (30) is hydraulically moved by means of a pressure fluid,
**characterized in that**
a flow resistance for the pressure fluid, arising above the throttle bushing (30) when the control-rod supporting member (40) is moved, changes as a consequence of a varying free flow cross-section through a varying outer diameter of the control-rod supporting member (40).

## Revendications

1. Mécanisme de commande des barres (2) pour un réacteur nucléaire, en particulier pour un réacteur à eau bouillante, ayant un boîtier d'actionnement (8) dans lequel un élément porteur de la barre de commande (40) peut être déplacé entre une position de base et une position finale rentrée, une section partielle du dit élément porteur de la barre de commande (40) étant guidée dans une douille d'étranglement (30) et son bout inférieur (25) concourant avec une unité d'actionnement (9),
**caractérisé en ce**
**qu'**un chemin de courant (42) passant par-dessus de la douille d'étranglement (30) est prévu pour un fluide sous pression, avec une section libre de courant qui varie en fonction de la position actuelle de l'élément porteur de la barre de commande (40) en raison du fait que l'élément porteur de la barre de commande (40) a un diamètre extérieur changeant.

2. Mécanisme de commande des barres (2) selon la revendication 1,
**caractérisé en ce que**
la section libre de courant augmente de la position de base vers la position finale rentrée.

3. Mécanisme de commande des barres (2) selon la revendication 1 ou 2,
**caractérisé en ce que**
l'élément porteur de la barre de commande (40) a un diamètre extérieur réduit dans une zone inférieure en regard de l'unité d'actionnement (9).

4. Mécanisme de commande des barres (2) selon la revendication 3,
**caractérisé en ce que**
l'élément porteur de la barre de commande (40) s'amincit continuellement, dans une zone conique (48), au diamètre extérieur réduit.

5. Mécanisme de commande des barres (2) selon la revendication 3 ou 4,
**caractérisé en ce que**
l'élément porteur de la barre de commande (40) ne présente le diamètre réduit constamment que sur une partie de sa longueur.

6. Mécanisme de commande des barres (2) selon l'une quelconque des revendications précédente,
**caractérisé en ce que**
l'élément porteur de la barre de commande (40) est conçu comme un piston creux pourvu d'au moins un orifice de dérivation (52) dans sa paroi.

7. Mécanisme de commande des barres (2) selon la revendication 6 et la revendication 3,
**caractérisé en ce que**
l'orifice de dérivation (52) est disposé devant ou dans la zone de la diminution (48) de l'élément porteur de la barre de commande (40) au diamètre extérieur réduit.

8. Mécanisme de commande des barres (2) selon l'une quelconque des revendications 3 à 5 ou 7,
**caractérisé en ce que**
l'élément porteur de la barre de commande (40) présente dans la zone du diamètre extérieur réduit une nervure extérieure (50), qui se trouve à l'intérieur de la douille d'étranglement (30) lorsque l'élément porteur de la barre de commande (40) est positionné dans la position finale rentrée.

9. Mécanisme de commande des barres (2) selon la revendication 8,
**caractérisé en ce que**
la nervure extérieure est conçue comme une nervure annulaire périphérique (50), dont le diamètre extérieur correspond environ au diamètre intérieur de la douille d'étranglement (30).

10. Mécanisme de commande des barres (2) selon l'une quelconque des revendications 3 à 9,
**caractérisé en ce que**
des nervures longitudinales (54) sont disposées dans la zone du diamètre extérieur réduit.

11. Procédé pour rentrer une barre de commande (29) dans un noyau d'un réacteur nucléaire, en particulier pour l'arrêt d'urgence du réacteur nucléaire, dans lequel un élément porteur de la barre de commande (40) portant la barre de commande (29) et étant guidé dans une section partielle d'une douille d'étranglement (30) est déplacé hydrauliquement au moyen d'un fluide sous pression,
**caractérisé en ce**
**qu'**une résistance de courant pour le fluide sous pression, se formant au-dessus de la douille d'étranglement (30) lorsque l'élément porteur de la barre de commande (40) est déplacé, change par suite d'une variation de la section libre de courant moyennant une variation du diamètre extérieur de l'élément porteur de la barre de commande (40).
